# FASCICULE DE BREVET EUROPEEN

(11) **EP 0 457 733 B1**
(45) Date de publication et mention de la délivrance du brevet: **15.03.1995**
(21) Numéro de dépôt: 91810371.4
(22) Date de dépôt: 15.05.1991
(51) Int. Cl.: F16H 55/17

(54) **Poulie**
Riemenscheibe
Pulley

(30) Priorité: 17.05.1990 CH 1674/90
(43) Date de publication de la demande: 21.11.1991
(73) Titulaire: Tornos-Bechler SA Fabrique de Machines Moutier, CH-2740 Moutier (Kanton-Bern) (CH)
(72) Inventeur: Coste, Laurent, CH-2740 Moutier (CH)
(74) Mandataire: Fischer, Franz Josef

(56) Documents cités:
- DE-A- 2 314 000
- DE-A- 2 804 549
- DE-A- 2 833 458

## Description

La présente invention a pour objet une poulie, notamment pour courroie crantée, constituée d'un corps de poulie et de deux flasques de guidage de la courroie.

On utilise des poulies de ce genre pour l'entraînement d'organes mus en rotation non seulement dans le domaine de la machine-outil mais également dans d'autres domaines, comme des ensembles-moteur ou des dispositifs de commande, etc.

La présente invention vise à perfectionner la fabrication des poulies grâce à diverses mesures qui peuvent être combinées et qui apportent des améliorations à divers points de vue.

A l'heure actuelle, un grand nombre de poulies du type destiné à coopérer avec des courroies crantées, donc présentant des dents sur leur pourtour, sont munies de flasques destinés à guider la courroie, et ces flasques sont constitués par des couronnes planes et minces engagées sur des portées cylindriques du corps de poulie et fixées par sertissage en trois ou quatre points du pourtour de la poulie, contre un épaulement du corps. Dans certains cas, la couronne est biseautée sur sa face interne à sa périphérie.

Or, cette construction s'est révélée présenter plusieurs défauts.
A) Le montage et l'usinage des flasques ainsi que l'usinage de la poulie nécessitent des opérations complexes. En particulier, le sertissage du flasque après sa mise en place sur sa portée nécessite des outils spéciaux.
B) Dans le cas de poulies à dents prévues pour coopérer avec des courroies crantées, on remarque que les dents de la courroie sont fréquemment soumises à une usure exagérée découlant de défaut d'alignement.
C) Egalement dans le cas de poulies à dents prévues pour courroie crantée, la disposition traditionnelle présente l'inconvénient de produire un bruit devenant d'autant plus gênant que la vitesse est plus élevée, ce bruit étant dû à l'évacuation de l'air entre la courroie et les flasques lors de l'engagement des dents de la courroie.

Le fascicule DE-A-2 833 458 décrit une poulie selon les caractéristiques du préambule de la revendication 1. Le fascicule DE-A-2 804 549 décrit une construction particulière appliquée à des poulies à dents, pour courroies crantées. Dans le second document, les flasques présentent des ouvertures tandis que dans le premier le profil radial des flasques est conformé de manière que leur périphérie soit appuyée obliquement contre les extrémités des dents. Dans le deuxième cas, seul le défaut C est évité tandis que dans le premier, le défaut A est éliminé, mais pas les défauts B et C.

Or, on a constaté que le remplacement de flasques minces, fixés par sertissage, par une construction dans laquelle les flasques sont des éléments massifs ayant une surface intérieure solidarisée par serrage radial au corps de poulie, permettait de simplifier l'usinage et le montage de la poulie, améliorait la précision et par conséquent la fiabilité des dispositifs et, dans le cas des poulies à dents, ménageait des passages pour l'air aux extrémités des gorges situées entre les dents, ce qui éliminait le bruit remarqué auparavant.

La présente invention a donc pour objet une poulie, comportant les caractéristiques des revendications 1 à 11.

On va expliquer ci-après, à l'aide d'un exemple et d'une variante, comment la poulie selon l'invention peut être réalisée.

On se référera pour cela à deux formes d'exécution préférées de l'objet de l'invention qui sont représentées au dessin annexé dont
la fig. 1 est une vue en coupe partielle d'une poulie pour courroie crantée selon l'invention, par un plan contenant l'axe,
la fig. 2 est une vue en élévation dans le sens de la flèche A à la fig. 1 et
la fig. 3, une vue analogue à la fig. 1, montrant une deuxième forme d'exécution de la poulie selon l'invention.

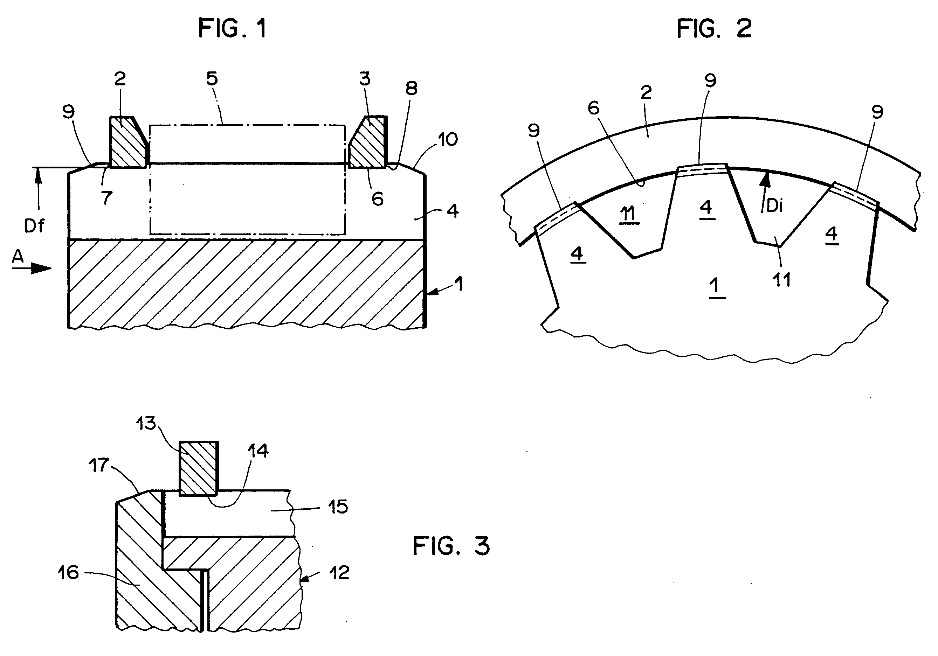

La poulie représentée partiellement aux figures 1 et 2 est constituée de trois pièces: un corps de poulie 1 et deux flasques 2 et 3. Le corps de poulie 1 présente, à sa périphérie, des dents 4, destinées à coopérer avec les dents d'une courroie crantée 5 représentée en traits mixtes à la fig. 1. Les flasques 2 et 3 sont des pièces en forme de couronne rapportées, massives. Ces pièces sont usinées avec une surface intérieure cylindrique 6 dont le diamètre est déterminé avec précision en fonction des dimensions des rainures 7 et 8, ménagées dans les surfaces sommitales des dents 4. Ces rainures sont situées au voisinage des extrémités des dents, comme on le voit à la fig. 1. Leur profil est rectangulaire. Leur profondeur est ajustée de façon que le diamètre du fond des rainures Df soit légèrement plus grand que le diamètre d'usinage Di des surfaces intérieures 6.

Sur les côtés extérieurs des rainures 7 et 8, la surface sommitale des dents 4 se prolonge sur une légère distance, après quoi les dents 4 présentent des surfaces coniques faiblement inclinées et désignées par 9 et 10.

Les flasques 2 et 3 peuvent être mis en place par chassage sur les surfaces coniques 9 et 10 de façon à ce que la dilatation élastique leur permette de s'engager dans les rainures 7 et 8.

Une fois que les flasques ont été mis en place, leurs surfaces intérieures 6 sont serrées sur les fonds des rainures qui sont usinées au diamètre Df, de sorte que ces surfaces sont solidarisées avec le corps de poulie à ces emplacements. On obtient ainsi un ajustage extrêmement stable et précis des flasques et, par conséquent, de leur face interne par rapport au corps de poulie, ce qui améliore le guidage de la courroie. Les segments de flasques situés entre les dents sont solicités élastiquement à la flexion, ce qui garantit une fixation rigide.

Comme on l'a vu plus haut, un avantage supplémentaire de ce mode de construction résulte du fait que les gorges 11 délimitées entre les dents 4 sur le corps de poulie, communiquent, à leurs deux extrémités, avec les faces latérales de la poulie par dessous les flasques. On a constaté, en effet, que du fait de cette disposition, le bruit de fonctionnement de la courroie crantée était considérablement diminué, surtout à grande vitesse.

La fig. 3 montre une variante d'exécution. A ce sujet, trois mesures différentes peuvent être prises.
I. Au lieu de flasques biseautés intérieurement, comme les flasques 2 et 3, le corps de poulie 12 est équipé ici de flasques tels que 13, dont le profil est rectangulaire et massif. Le flasque 13 représenté à la fig. 3 est engagé de la même manière que le flasque 2 ou le flasque 3, dans une rainure 14 ménagée dans les faces sommitales des dents 15 du corps de poulie 12.
II. Dans cette forme d'exécution, pour réduire la largeur du corps de poulie, on n'a laissé subsister, sur le côté extérieur de la rainure 14, qu'une faible largeur de la surface sommitale des dents 15.
III. Pour permettre le montage des flasques par une opération de chassage, on prévoit un outil auxiliaire 16. C'est cet outil de montage 16 qui comporte les surfaces tronconiques 17 permettant la mise en place des flasques. Après élimination de l'outil de montage 16, qui peut être en forme de disque plein ou de disque denté, les passages faisant communiquer les gorges ménagées entre les dents 15 avec les côtés extérieurs de la poulie, sont établis comme dans la première forme d'exécution.

Avec l'agencement de la fig. 3, les flasques 2, 3 ou 13 peuvent aussi être mis en place dans les rainures 7, 8 ou 14 par chauffage préalable de façon que le diamètre Di des surfaces 6 soit agrandi au-delà du diamètre des surfaces sommitales des dents 4 ou 15.

De plus, on peut encore éviter les rainures 7 et 8 et utiliser directement des portions des surfaces sommitales des dents pour réaliser l'assise des flasques par serrage radial, comme décrit plus haut.

## Revendications

1. Poulie, notamment pour courroie crantée, constituée d'un corps de poulie (1) et de deux flasques (2, 3) de forme annulaire pour le guidage d'une courroie (5), le corps de poulie présentant à sa périphérie, des dents (4), elles-mêmes présentant des surfaces sommitales, caractérisée en ce que les surfaces internes (6) des flasques sont fixées par serrage radial sur des parties des surfaces sommitales des dents (4).

2. Poulie selon la revendication 1, dans laquelle les surfaces internes (6) des flasques sont cylindriques et coaxiales à la poulie.

3. Poulie selon l'une des revendications 1 ou 2, dans laquelle les surfaces sommitales des dents (4) sont cylindriques et coaxiales à la poulie au moins dans les zones destinées à recevoir les surfaces internes (6) des flasques.

4. Poulie selon la revendication 1, dans laquelle des rainures (7, 8) sont pratiquées dans les surfaces sommitales desdites dents (4) et en ce que les surfaces internes (6) des flasques sont engagées dans lesdites rainures.

5. Poulie selon la revendication 4, dans laquelle le diamètre (Df) du fond des rainures (7, 8) est légèrement plus grand que le diamètre d'usinage (Di) des surfaces internes (6) des flasques.

6. Poulie selon l'une des revendications 4 ou 5, caractérisée en ce que les rainures (7, 8) sont cylindriques et coaxiales à la poulie.

7. Poulie selon l' une des revendications 4 à 6, dans laquelle lesdites rainures (7, 8) sont situées au voisinage des bordures externes desdites dents (4).

8. Poulie selon l'une des revendications précédentes, notamment pour courroie crantée, dans laquelle les dents sont séparées par des gorges (11) parallèles, orientées dans le sens de l'axe de la poulie et où lesdites gorges communiquent au moins à une de leur extrémités avec le côté latéral de la poulie par des passages permettant des déplacements d'air en cours de rotation.

9. Poulie selon l'une des revendications précédentes, dans laquelle le profil des flasques (2, 3) présente un biseau sur son côté intérieur.

10. Poulie selon l'une des revendications 1 à 9, dans laquelle le corps de poulie (1) comporte des cônes d'engagement (9, 10) des flasques adjacents aux rainures.

11. Poulie selon l'une des revendications 1 à 9, dans laquelle un outil de montage (16) est associé à la poulie, cet outil de montage présentant des surfaces tronconiques (17) d'engagement des flasques et étant susceptible d'être fixé sur chacun des côtés latéraux de la poulie pour l'engagement d'un des flasques.

## Claims

1. A pulley, particularly for a notched belt, comprising a pulley body (1) and two cheeks (2, 3) of annular shape for guiding a belt (5), the body of the pulley having on its periphery teeth (4), these having apical surfaces, characterized in that the inside surfaces (6) of the cheeks are fixed by radial tightening on parts of the apical surfaces of the teeth (4).

2. Pulley according to claim 1, in which the inside surfaces (6) of the cheeks are cylindrical and coaxial with the pulley.

3. Pulley according to one of the claims 1 or 2, in which the apical surfaces of the teeth (4) are cylindrical and coaxial with the pulley at least in the zones intended to receive the inside surfaces (6) of the cheeks.

4. Pulley according to claim 1, in which grooves (7, 8) are made in the apical surfaces of said teeth (4) and in that the inside surfaces (6) of the cheeks are engaged in said grooves.

5. Pulley according to claim 4, in which the diameter (Df) of the bottom of grooves (7, 8) is slightly larger than the machining diameter (Di) of the inside surfaces (6) of the cheeks.

6. Pulley according to one of the claims 4 or 5, characterized in that the grooves (7, 8) are cylindrical and coaxial with the pulley.

7. Pulley according to one of the claims 4 to 6, in which said grooves (7, 8) are situated in proximity to outside edges of said teeth (4).

8. Pulley according to one of the preceding claims, in particular for a notched belt, in which the teeth are separated by parallel channels (11) oriented in the direction of the axis of the pulley and where said channels communicate at least at one of their ends with a side of said pulley by passages permitting movements of air during rotation.

9. Pulley according to one of the preceding claims, in which the profile of the cheeks (2, 3) has a bevel on its interior side.

10. Pulley according to one of the claims 1 to 9, in which the pulley body (1) comprises cheek-engagement cones (9, 10) adjacent to the grooves.

11. Pulley according to one of the claims 1 to 9, in which a mounting tool (16) is associated with the pulley, said mounting tool having frustoconical cheek-engagement surfaces (17) and being fixable on each side of the pulley for engagement of one of the cheeks.

## Patentansprüche

1. Riemenscheibe, insbesondere für Zahnriemen, die einen Riemenscheibenkörper (1) und zwei ringförmige Flansche (2, 3) zur Führung eines Riemens (5) umfassen, und der Riemenscheibenkörper an seinem Umfang mit Zähnen (4) versehen ist, die ihrerseits Zahnspitzen aufweisen, dadurch gekennzeichnet, dass die inneren Oberflächen (6) der Flansche durch radiale Pressung auf den Bereichen der Oberflächen der Zahnspitzen (4) befestigt sind.

2. Riemenscheibe nach Anspruch 1, dadurch gekennzeichnet, dass die inneren Oberflächen (6) der Flansche zylindrisch und koaxial zur Riemenscheibe sind.

3. Riemenscheibe nach einem der Ansprüche 1 oder 2, dadurch gekennzeichnet, dass die Oberflächen der Spitzen der Zähne (4) mindestens in den Bereichen, welche die inneren Oberflächen der Flansche aufnehmen, zylindrisch und koaxial zur Riemenscheibe sind.

4. Riemenscheibe nach Anspruch 1, dadurch gekennzeichnet, dass in den Oberflächen der genannten Spitzen der Zähne (4) Rillen (7, 8) angebracht sind, und dass die inneren Oberflächen (6) der Flansche in diese Rillen zu liegen kommen.

5. Riemenscheibe nach Anspruch 4, dadurch gekennzeichnet, dass der Durchmesser (Df) des Grundes der Rillen (7, 8) geringfügig grösser ist als der bearbeitete Durchmesser (Di) der inneren Oberflächen (6) der Flansche.

6. Riemenscheibe nach einem der Ansprüche 4 oder 5, dadurch gekennzeichnet, dass die Rillen (7, 8) zylindrisch und koaxial zur Riemenscheibe sind.

7. Riemenscheibe nach einem der Ansprüche 4 bis 6, dadurch gekennzeichnet, dass die genannten Rillen (7, 8) in der Nähe der äusseren Ränder der genannten Zähne angebracht sind.

8. Riemenscheibe nach einem der vorhergehenden Ansprüche, insbesondere für Zahnriemen, dadurch gekennzeichnet, dass die Zähne durch parallele Vertiefungen (11) getrennt sind, die in Achsrichtung der Riemenscheibe ausgerichtet sind, und dass die genannten Vertiefungen mindestens an einem ihrer äusseren Enden mittels einem Durchgang mit der lateralen Seite der Riemenscheibe verbunden sind, so dass die Luft bei laufender Rotation entweichen kann.

9. Riemenscheibe nach einem der vorhergehenden Ansprüche, dadurch gekennzeichnet, dass das Profil der Flansche (2, 3) auf der Innenseite eine Abschrägung aufweist.

10. Riemenscheibe nach einem der Ansprüche 1 bis 9, dadurch gekennzeichnet, dass der Riemenscheibenkörper (1) Konen (9, 10) zum Aufbringen der Flansche aufweist, die den Rillen benachbart sind.

11. Riemenscheibe nach einem der Ansprüche 1 bis 9, dadurch gekennzeichnet, dass mit der Riemenscheibe ein Montagewerkzeug (16) verbindbar ist, welches kegelstumpfartige Oberflächen (17) für das Aufbringen der Flansche aufweist, und welches auf jeder lateralen Seite der Riemenscheibe befestigt werden kann, um einen der Flansche aufbringen zu können.
